# EUROPEAN PATENT SPECIFICATION

(11) **EP 2 382 585 B1**
(45) Date of publication and mention of the grant of the patent: **06.05.2015**
(21) Application number: 09772841.4
(22) Date of filing: 01.07.2009
(51) Int. Cl.: G06K 9/00, F42B 35/00

(54) **SURFACE ANALYSIS APPARATUS AND METHOD**
OBERFLÄCHENANALYSEVORRICHTUNG UND VERFAHREN
APPAREIL ET PROCÉDÉ D'ANALYSE DE SURFACE

(30) Priority: 01.07.2008 GB 0811985
(43) Date of publication of application: 02.11.2011
(73) Proprietor: Forensic Pathways Limited, Birmingham B4 6GA (GB)
(72) Inventor: HARRISON, Philip, Huddersfield West Yorkshire HD1 3DH (GB); BLUNT, Liam, Huddersfield West Yorkshire HD1 3DH (GB)
(74) Representative: Benson, Christopher
(86) International application number: PCT/GB2009/050763
(87) International publication number: WO 2010/001161

(56) References cited:
- ZENO J. GERADTS, JURRIEN BIJHOLD, ROB HERMSEN, FIONN MURTAGH: "Image matching algorithms for breech face marks and firing pins in a database of spent cartridge cases of firearms" PROCEEDINGS OF SPIE, IMAGE ANALYSIS AND CHARACTERIZATION, [Online] vol. 4232, 5 November 2000 (2000-11-05), XP002548449 Retrieved from the Internet: URL:http://dx.doi.org/10.1117/12.417573> [retrieved on 2010-10-01]
- D. LI: "Ballistics projectile image analysis for firearm identification" IEEE TRANSACTIONS ON IMAGE PROCESSING, vol. 15, no. 10, 1 October 2006 (2006-10-01), pages 2857-2865, XP002548450
- STEPHANE MALLAT: "UNE EXPLORATION DES SIGNAUX EN ONDELETTES" 2000, LES EDITIONS DE L'ECOLE POLYTECHNIQUE , XP002548452 ISBN: 978-2-7302-0733-1 Chapter 1, Introduction à un monde transitoire
- BONFANTI ET AL: "Visualisation by confocal microscopy of traces on bullets and cartridge cases" SCIENCE AND JUSTICE, HARROGATE, GB, vol. 40, no. 4, 1 October 2000 (2000-10-01), pages 241-256, XP022554300 ISSN: 1355-0306
- SMITH C L: "An intelligent imaging approach to the identification of forensic ballistics specimens" INFO-TECH AND INFO-NET, 2001. PROCEEDINGS. ICII 2001 - BEIJING. 2001 I NTERNATIONAL CONFERENCES ON OCT. 29 - NOV. 1, 2001, PISCATAWAY, NJ, USA,IEEE, vol. 3, 29 October 2001 (2001-10-29), pages 390-396, XP010577074 ISBN: 978-0-7803-7010-4
- DEBASIS MAZUMDAR, SOMA MITRA, AVIJIT KAR: "An Automatic Bullet Cartridge Identification System" PROCEEDINGS OF THE ASIAN CONFERENCE ON COMPUTER VISION, 23 January 2002 (2002-01-23), - 25 January 2002 (2002-01-25) XP002548451

## Description

The present invention relates to apparatus for analysing surfaces and to a method of surface analysis. In particular but not exclusively the invention relates to apparatus and a method for identifying characteristics of firearms and associated ammunition including cartridges and bullets.

### BACKGROUND

The identification of a firearm used to fire a bullet or other projectile found at the scene of a crime is often critical to the solving of a crime. Forensic investigators seek to recover bullets, portions of bullets, and cartridge cases from the crime scene in order to try to identify the firearm responsible for firing the bullet. For example, the investigators may seek to determine whether or not the firearm is one associated with another crime they have investigated. This determination is performed by comparing portions of the surfaces of projectiles recovered from different crime scenes with one another.

In the event that a firearm is recovered from a crime scene or a suspect, investigators typically perform a controlled firing of a bullet from the firearm, recover the fired bullet, and analyse the bullet. Characteristics of the bullet may then be compared with those of projectiles recovered from one or more crime scenes in order to determine whether that particular firearm may have been used at a crime scene.

Firearms identification is concerned with two types of characteristics of a firearm: firearm 'class' characteristics and 'individual' firearm characteristics. Firearm class characteristics include characteristics such as the rifling number of a firearm and are characteristics associated with a particular class of firearm, usually limited to a particular group of manufacturers of firearms.

Firearms and portions of projectiles recovered from crime scenes can be classified according to the class of firearm from which they were fired. In firearm identification, once the class of a firearm or class of firearm from which a projectile has been fired has been identified, an investigator may narrow the scope of the search of a database of firearms in order to search only firearms or projectiles corresponding to a particular class.

When a bullet is fired from a firearm, markings may be formed on the bullet indicative of a structure and configuration of the firearm, allowing the class of firearm that fired the bullet to be determined. Markings associated with a particular class of firearm are referred to as class characteristic markings or 'class characteristics'. Class characteristic markings include rifling markings due to contact between the bullet and rifling formations on an inner wall of the barrel of the firearm, or firing pin markings due to contact between a firing pin of the firearm and the cartridge case. Markings made by an ejector pin on a cartridge are another example of a class characteristic marking. Markings are also typically formed on a bullet that are characteristic of an individual example of the firearm. Such markings are generally associated with the manufacture and usage history of the particular example. Individual characteristics include markings in the form of striations superimposed on rifling markings. Rifling markings due to land and grooves defined on the inner surface of the barrel form corresponding 'land engraved areas' (LEA) and 'groove engraved areas' (GEA) on the bullet surface. It is to be understood that GEAs are raised impressions on the bullet relative to the LEAs, which are in the form of grooved impressions on the bullet.

Striations are typically superimposed on the GEA regions.

For example, a particular class of firearm may be provided with a helical rifling formation having a given set of parameters such as rifling number (i.e. the number of and twist direction of turns of the helical rifling formation), twist angle of the turns (being the angle of the turns with respect to a circumferential plane of the barrel) and amplitude of the rifling formation (corresponding to a surface height difference between a peak of a land impression and a trough of an adjacent groove impression).

The size of the barrel of the firearm may also impart markings characteristic of the class of firearm.

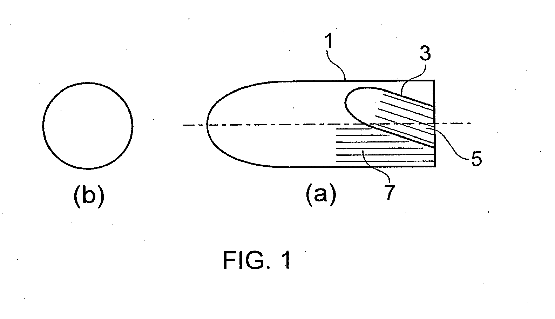

FIG. 1 is a schematic diagram showing (a) a side view and (b) a cross-sectional view of a bullet 1 that has been fired from a firearm. The diagram shows the presence of 'lands' 3 in the form of generally helical markings on the surface of the bullet. Forcing cone marks 7 can also be seen on the bullet surface. From FIG. 1(b) it can be seen that the bullet is not a perfect cylinder in shape. Rather the bullet is in the form of a distorted cylinder.

It is to be understood that lands 3 on the bullet surface are formed by grooves in the barrel of the firearm from which the bullet was fired. The lands 3 on the bullet surface may be referred to as 'groove engraved areas' 3 of the bullet surface since they are engraved by grooves in the barrel of the firearm.

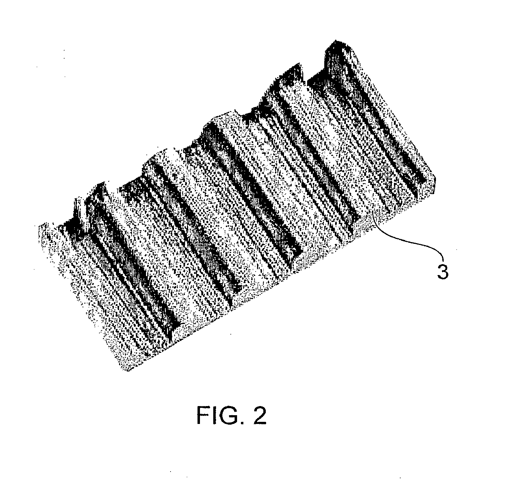

An example of 3D image data showing the presence of 'lands' 3 on a bullet surface is shown in FIG. 2. The image was obtained using a modified contacting stylus roughness measuring instrument. The scale of the measurement is shown on the image.

As discussed above, individual characteristics are those marks including striations and other imperfections which make a particular fired bullet unique and serve as the basis for a conclusive identification of a particular firearm as corresponding to a given bullet or other projectile that has been fired. With reference to FIG. 1 it can be seen that striations 5 are present within the groove engraved areas 3 on the surface of the bullet. Striations and other unique marks that identify a bullet as having been fired from a particular firearm barrel are usually located in the groove engraved areas of the bullet.

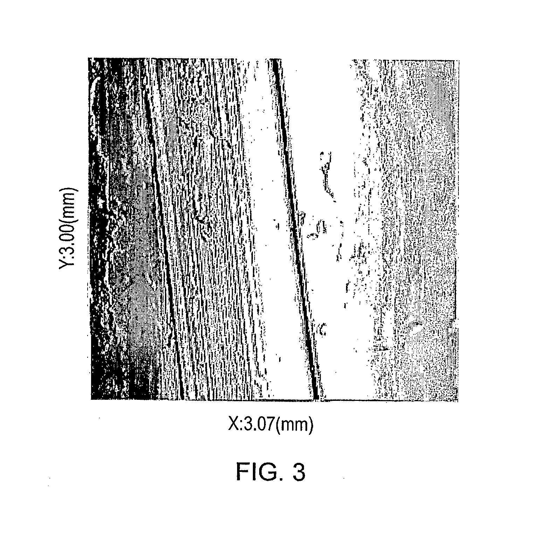

An example of striations imparted by a particular firearm to a bullet fired from that firearm are shown in FIG. 3. Each side of the image corresponds to a distance of 3mm.

It is to be understood that, in addition to striations, variations in the actual values of parameters characteristic of a given class of firearms such as twist angle and amplitude of the rifling formations may be apparent between individual examples of firearms which may be useful in identifying individual examples of a given firearm.

It is known to analyse ballistics evidence obtained from the scene of a crime using both 2D microscopy techniques (such as light microscopes and electron microscopes) and 3D surface topography measurements.

The analysis of surface topography using 3D topographical data has the advantage that quantitative surface height information can be obtained, allowing quantitative comparison of data such as the dimensions of GEAs and striations obtained from different pieces of ballistics evidence.

In some systems, 3D surface topography information is obtained by means of a confocal microscope that may be scanned over the surface of a sample. In the case of a sample such as a bullet having a cylindrical surface, the cylindrical surface is analysed by rotation of the surface in juxtaposition with the confocal microscope.

Such systems have a number of disadvantages. For example, whilst confocal microscopes are capable of obtaining images with a resolution of the order of one nanometre or less, errors due to light scattering from oblique or steep sided surfaces can result in light projected at a surface by the microscope not being correctly detected by the microscope. Thus, misleading or incomplete datasets can be generated by such systems.

Furthermore, in the case of known systems relying on rotation of a sample in front of a sensor in order to obtain a 3D model of a surface of the sample, the assumption is made that the sample is cylindrical and that the sample rotates about a longitudinal axis of the sample. This assumption is not necessarily valid for all samples.

In particular, bullets and cartridge cases often experience substantial deformation during a process of firing of the bullet from a firearm, and subsequent impact of the bullet with an object.

Zeno J Geradts et al: "Image matching algorithms for breech face marks and firing pins in a database of spent cartridge cases of firearms", Proceedings of SPIE, Image Analysis and Characterization, Vol. 4232, 5 November 2000 discloses the results of a study based on image matching of cartridge cases.

It is an aim of embodiments of the invention to at least partially mitigate at least one of the above mentioned problems using new measurement and analysis techniques and apparatus.

### STATEMENTS OF THE INVENTION

Aspects and embodiments are set out in the appended claims.

Embodiments of the invention will now be described with reference to the accompanying drawings in which:
FIGURE 1 is a schematic illustration of a bullet in (a) side view and (b) cross-sectional view;
FIGURE 2 is an isometric plot obtained from 3D surface topography data showing 'lands' formed in a surface of a bullet;
FIGURE 3 is a plan view image of a bullet surface obtained from 3D surface topography data showing striations formed in the surface;
FIGURE 4 is a schematic diagram of apparatus according to an embodiment of the invention;
FIGURES 5 to 8 are screenshots taken from a software program provided with apparatus according to some embodiments of the invention.

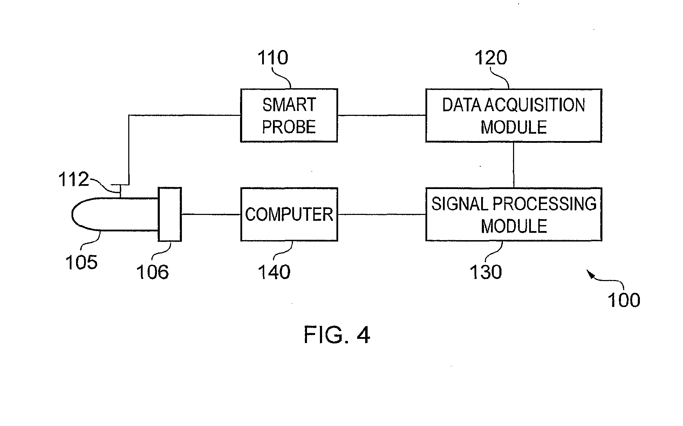

According to one embodiment of the invention, apparatus 100 is provided as shown in the schematic diagram of FIG. 4. The apparatus 100 has a smart probe module 110 having a probe element 112 operable to be scanned over the surface of a sample 105 mounted on a sample holder 106. The probe element 112 may be a contacting or noncontacting probe element 112. The probe module 110 is arranged to generate data corresponding to features of the surface topography of the sample 105.

A data acquisition module 120 receives the data from the smart probe module 110, stores the data and passes the data to a signal processing module 130. A computer 140 is configured to receive data processed by the signal processing module 130. The computer is operable by a user to analyse and compare data obtained by the data acquisition module or to pass data to a database where the data may be stored for later analysis.

In some embodiments a precision self-centering sample holder 106 is employed to rotate the sample relative to the probe element 112. In some embodiments the sample holder 106 is arranged to support the sample 105 in a substantially vertical orientation and to rotate the sample 105 about a substantially vertical axis. In some embodiments the sample 105 is rotated through substantially 360° whilst surface morphological data is captured by the apparatus as the sample 105 is rotated. In other words a single substantially continuous scan is performed as the sample 105 is rotated.

In the case of a sample such as a bullet or portion of a bullet that is generally cylindrical in shape, in some embodiments the apparatus is configured to assume the sample is cylindrical in shape. However, some embodiments are arranged not to make this assumption, but rather to obtain a true 3D model of the surface of the sample. This is because, as discussed above, distortion of a bullet fired from a firearm may occur due to contact between the bullet and an interior wall of the firearm.

In some embodiments the sample holder 106 is also movable with respect to the probe element 112. In some embodiments this feature facilitates access by the probe element 112 to portions of the sample that would be otherwise inaccessible in some embodiments.

In some embodiments the apparatus is configured to allow the probe to obtain 3D surface topographical data from an interior wall of the barrel of a firearm. The probe is shaped and sized whereby it may be inserted within the barrel of the firearm thereby to obtain the surface topographical data.

In some embodiments the probe element 112 is a stylus element having a tip arranged to contact a surface of the sample 105. Since direct contact is achieved between the tip and the sample, a more accurate measurement of the surface topography of a sample may be made, compared with measurements made using some non-contact techniques.

In some embodiments an optical probe is used to obtain surface topographical data. Such a probe is particularly useful in situations in which it is required to measure the surface topography of a sample surface that may be damaged by contact with a mechanical probe.

The requirements of a surface analysis apparatus for ballistics analysis in terms of resolution is not as high as that required in some surface analysis situations. For example, in the field of nanotechnology research nanometre or sub-nanometre resolution may be desirable. However, for the purpose of ballistics identification, nanometre resolution analysis is not necessarily appropriate. Thus, relatively coarse styluses may be used, compared with probes used in nanotechnology applications such as atomic force microscopy (AFM).

Apparatus according to embodiments of the invention is arranged to extract data relating to class characteristics and individual characteristics.

In respect of the extraction of class characteristics, the apparatus is arranged to apply a surface segmentation technique based on morphological analysis to a 3D dataset corresponding to the 3D surface topography of a sample. This technique for the analysis of surfaces is well documented, see for example L. Blunt and X. Jiang, Advanced Techniques for Assessment Surface Topography , 1 st edn, London Penton Press, 2003, and P.J. Scott, Pattern analysis and metrology: the extraction of stable features from observable measurements, Proc. Of the Royal Society of London, Series A. 460 (2004) 2845 - 2864.

In performing a surface segmentation analysis, the apparatus is arranged to divide a region of a surface of the sample (also referred to as a 'landscape') into regions consisting of hills and regions consisting of valleys. By definition, the boundaries between hills are called 'course lines', and the boundaries between valleys are called 'ridge lines'. A scale limited surface can be represented by networks of critical points (peaks, pits and saddle points) and critical lines (ridge lines and course lines).

Height and area pruning methods of surface networks may be used for combination and removal of insignificant feature primitives. Segmentation analysis allows the locations of boundaries and the orientation of class features of bullets, cartridges and gun barrels to be effectively identified. Segmentation analysis is particularly useful for the measurement of step features and has the ability to detect step edges and orientation and is therefore ideally suited to the identification of class characteristics of a firearm.

Wavelet analysis is based on multi-scale analysis of surface data and allows extraction of different frequencies of variation of surface topography as a function of position over a surface. The technique is particularly suited to the extraction of fine scale striations characteristic of an individual firearm from a surface of a bullet, cartridge case or firearm barrel.

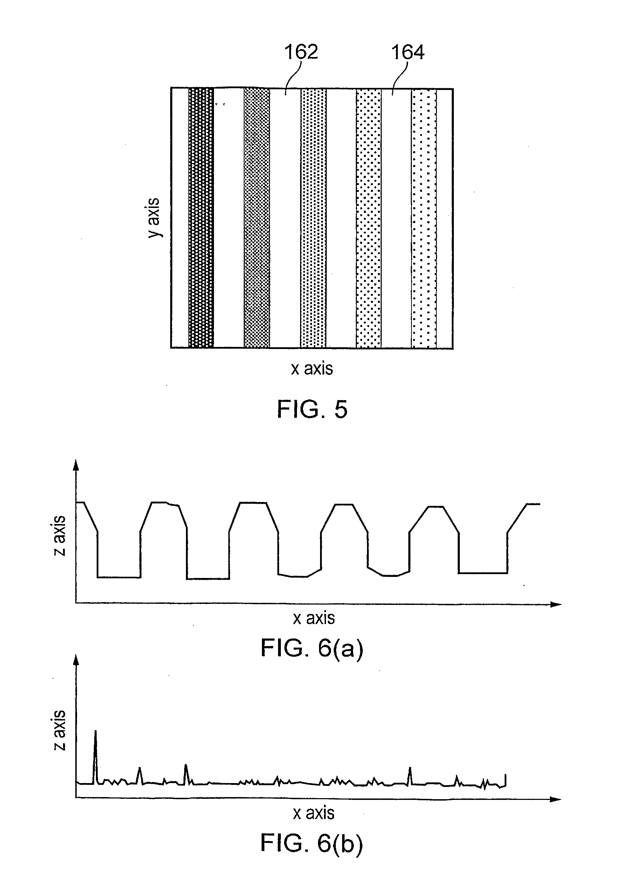

In some embodiments of the invention, the apparatus is configured to apply a surface segmentation analysis to the 3D data. FIG. 5 is a screenshot taken from a software program configured to process data acquired by the data acquisition module 120 and to perform a surface segmentation analysis. Data obtained from a region of a bullet surface having lands formed thereon is shown in plan-view in a portion 164 of a window 162. Regions of different height are shown in correspondingly different colours.

In the example of FIG. 5, regions of lower surface height are shown in lighter shading, and regions of greater surface height are shown in darker shading. Thus, 'groove' impressions (or regions) appear relatively light whilst so-called 'land' impressions (or regions) appear relatively dark.

The number of land regions in a given region of a bullet's surface, and dimensional information associated with the land regions such as width, amplitude, twist spiral direction and twist angle can be calculated from data segmented according to the segmentation analysis. Such information is characteristic of the class of the bullet as discussed above.

The rifling number (i.e. the number of and twist spiral direction of lands and grooves formed along an interior wall of a barrel of a firearm) is an important parameter in the classification of a firearm. The width of the region in which the lands and grooves are formed, the twist angle and amplitude of height variation between a peak of a land region and a trough of a groove region are also useful parameters. However, small variations in the characteristics of these features may be helpful in identifying a specific firearm.

It is noted that surface height and depth information may not be stable in a given region of lands and grooves, the information being affected by a variety of factors including the composition and diameter of a bullet.

In some circumstances the individual characteristics of a gun are the most important characteristics in the process of matching a bullet to a particular firearm. Extraction of these features from 3D surface topographical information is not a trivial task, however, since the topographical information obtained from a given surface generally comprises a relatively complex mixture of signals arising from class characteristics and individual characteristics. Consequently, 3D data obtained from two or more bullets and/or a bullet and a firearm are not readily suited to direct comparison and correlation with one another. For example, comparison of 3D data in the form of images using the naked eye, or by comparison techniques such as a cross-correlation function (CCF) analysis, are typically not as helpful as more advanced analysis.

Separation of class characteristics and individual characteristics has been found to be remarkably effective in enabling reliable identification of a firearm that has fired a given bullet. Similarly this separation has been found to be remarkably effective in identifying bullets or cartridge cases that have been fired by the same example of a given firearm without a requirement to analyse the firearm itself.

Apparatus of some embodiments of the invention is therefore configured to implement a strategy for extracting individual and class characteristics comprising the steps of performing a surface abstraction process; applying a wavelet filtering procedure to obtain topographical features of differing scale (which correspond to individual features of a bullet or firearm); and allowing efficient comparison of features via areal maps or profiles obtained from different bullets or one or more bullets and a firearm.

These processes will now be considered in further detail.

### Surface abstraction

Certain individual characteristics of the barrel of a firearm are transferred to the bullet surface as the bullet twists along the slightly undersized barrel during a process of firing the bullet. Averaging of 3D data obtained from a surface of a sample along the direction of twist can enhance the quality of data obtained from a sample. Thus, in some embodiments of the invention the software application is configured to project the bullet surface along the direction of rifling twist, thereby obtaining a one-dimensional signal characteristic of an individual firearm (N. Sentin et al, Three-Dimensional surface topography acquisition and analysis for firearm identification, J Forensic Sci 2006;51(2):282- 295). This signal provides a compact, faithful representation of the surface of a bullet, which contributes to efficiency of comparison between bullets, or between a bullet and data obtained from a barrel of a firearm.

FIG. 6(a) shows an example of a one-dimensional signal obtained from a bullet according to the above methodology.

In order to calculate the twist angle of the rifling of the barrel of the gun from which a bullet was fired, the apparatus calculates spectral energy in a number of angular directions and integrates the spectral energy.

### Wavelet filtering

The one-dimensional signal representing characteristics of the surface of the bullet of firearm comprises signals corresponding to both class characteristics and individual characteristics. As discussed above, accurate separation of these features is important in matching bullets and firearms.

The signal is elaborate in both time and frequency domains, and it is found that traditional filtering methods designed to process data in either the time or the frequency domain are not effective in obtaining meaningful results from the data. Furthermore, analysis of particular frequency bands is also found not to yield meaningful data.

Multi-scale analysis including wavelet analysis has been a powerful tool in analysing signals when high precision in both time and frequency domains are required (X.Q. Jiang, L. Blunt and K.J. Stout, Lifting Wavelet for 3D surface analysis, Int. J. Mach. Tools Design & Manufact. , 41 (2001), 2163-2170). By applying wavelet high-pass filtering, it has been found that a feature profile representing data corresponding to features of individual characteristics of the bullet of firearm surface can be extracted. FIG. 6(b) shows such a feature profile obtained from the data represented in FIG. 5.

### Comparison

Once a feature profile corresponding to individual characteristics has been obtained, as discussed above, a comparison between corresponding feature profiles of two or more bullets, or of a bullet and an interior wall of a barrel of a firearm may be made.

The cross-correlation function is a powerful tool in determining a level of similarity between two signals. In some embodiments of the invention a CCF analysis is used as a quantitative measure of the similarity between two feature profiles. Typically, the greater the value of the result of the CCF analysis, the greater the similarity between two feature profiles.

In some embodiments the apparatus is arranged to compare a subject feature profile with a plurality of other feature profiles, and to rank the other feature profiles in order of their similarity to the subject feature profile. In some embodiments the apparatus is configured to display a list of feature profiles in order of decreasing value of the result of the CCF analysis. Other methods of ordering feature profiles are also useful.

**Visualization**

As discussed above, in some embodiments the apparatus is configured to obtain a list of suggested 'best matches' between a subject bullet and one or more bullets and/or firearms in a database of data about the one or more bullets and/or firearms.

Alternatively or in addition the apparatus may be configured to obtain a list of suggested 'best matches' between a target firearm and one or more bullets and/or firearms in a database of data about the one or more bullets and/or firearms.

A final decision as to whether a bullet can be matched to a particular firearm can be made by firearm examiners based on the suggested 'best matches' list.

The suggested 'best matches' list may comprise a list of a predetermined number of firearms and/or bullets having the highest value of a result of a cross-correlation function comparison of data corresponding to one or more individual characteristics of a firearm obtained from a target firearm or subject bullet and corresponding data obtained from other firearms and/or bullets that are stored in the database.

In order to assist the examiners in the task of comparing data obtained, the apparatus is configured to provide a 3D virtual comparison microscopy facility.

A variety of 2D and 3D visualization graphic tools are known that assist firearm examiners in reaching a final decision. Visualization technology has been widely used for reconstructing 3D measured data in the field of surface metrology area.

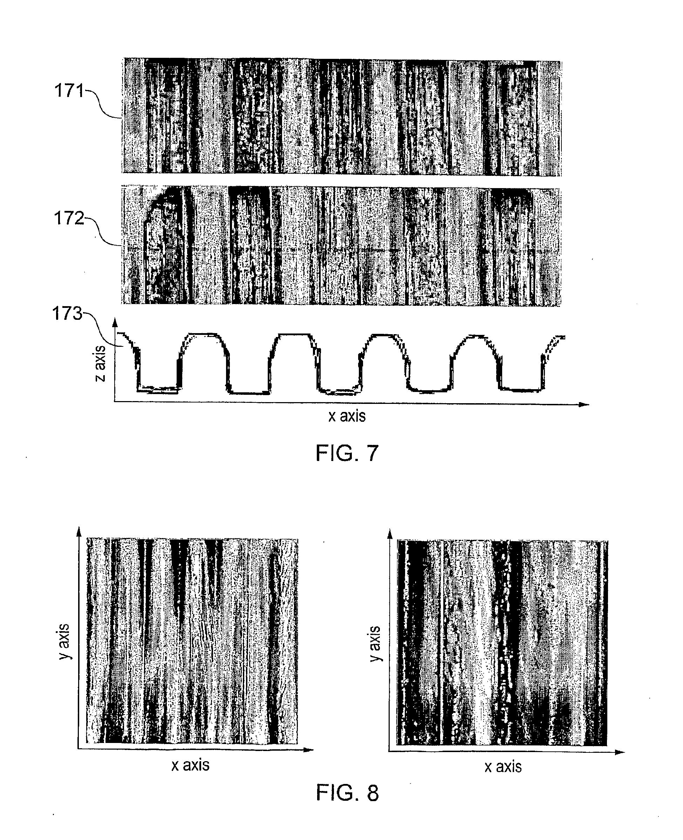

FIG. 7 is a screenshot from a virtual microscopy portion of the software program associated with the apparatus. In the screenshot, images 171, 172 of a surface region of two bullets may be seen. In the lower portion of the screenshot, a plot of a one-dimensional signal 173 obtained by surface abstraction is shown (see above) as determined for each of the surfaces. The corresponding signals are shown superimposed on one another in FIG. 7. FIG. 8 is a screenshot showing a close-up or 'zoom view' of respective areas of each bullet surface. The close-up views assist a user in visual comparison of particular features of surface topography.

It is to be understood that some embodiments of the invention or variations thereof may be used to identify tools used to make marks on a surface such as a window or a window frame, a door or a door frame or any other structure. In a similar manner to that in the case of firearms investigations, data obtained from surfaces marked by a tool may be stored in a database to identify markings on different surfaces made by the same tool. This can allow investigators to identify situations (e.g. crime scenes) where the same tool has been used to force entry into a building or other structure even when the actual tool used has not been recovered.

In other words such investigations are possible without being required to acquire the tool used to make the markings just as in the case of firearms investigations where individual characteristics of a firearm may be obtained from a plurality of samples of objects such as bullets or cartridge cases. In the case of firearms investigations it is sometimes possible to determine that the same firearm was most likely used in two more different crimes on the basis of the collection of bullets and/or cartridge cases from a plurality of crime scenes.

In the event that an actual example of a tool is available for inspection, the apparatus may be used to obtain a 3D dataset corresponding to a 3D virtual model of a marking surface of the tool. The apparatus may then be used to extract data indicative of a class of the tool and/or data corresponding to one or more individual characteristics of the tool. The apparatus may then compare the data corresponding to one or more individual characteristics of the tool with corresponding data obtained from objects that may have been marked by that tool and provide a list of 'best matches' between the tool and objects that may have been marked by that tool. For example the comparison may be performed by means of a cross-correlation function between sets of data corresponding to one or more individual characteristics of a tool.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A method of identifying characteristics of a marking object comprising the steps of:
providing a marked article (105) having a surface having markings caused by a marking surface of the marking object, wherein the marking object is a firearm; wherein the marking surface comprises one selected from amongst a firing pin, an ejector pin, a breech face, a magazine and the interior wall of the barrel of the firearm and the marked object comprises one selected from amongst a cartridge case or portion thereof, a replica of a cartridge case or portion thereof, a bullet, a portion of a bullet and a replica of a surface of a bullet or portion thereof;
**characterised by**:
obtaining a 3D dataset corresponding to a 3D virtual model of a 3D surface topology of the marked article (105) by means of a sensor;
extracting from the dataset by means of a surface segmentation analysis data indicative of a class of the marking object and storing said data in the database, wherein the surface segmentation analysis comprises dividing a region of the surface into regions consisting of hills and regions consisting of valleys;
extracting from the dataset by means of a surface wavelet filtering operation performed on a one dimensional signal characteristic of the marking object of the marked article, said one dimensional signal characteristic obtained by projecting said surface along the direction of a rifling twist, a feature profile representing data corresponding to one or more individual characteristics of the marking object and storing said data in the database.

2. A method as claimed in claim 1 further comprising the step of providing in the database data obtained from a plurality of marked articles (105) each marked article (105) being an article marked by a marking object, the data comprising data indicative of a class of the marking object responsible for causing the markings on each marked article (105), the data further comprising data corresponding to one or more individual characteristics of the marking object responsible for marking each marked article (105).

3. A method as claimed in claim 2 further comprising the step of identifying in the database a first set of one or more marked articles (105) having markings most likely caused by the marking object based on the extracted data indicative of the class of the marking object responsible for marking the marked article (105).

4. A method as claimed in claim 3 further comprising the step of identifying in the database a second set of one or more marked articles (105) having individual characteristics indicating that the marked article (105) was most likely marked by the marking object based on the extracted data corresponding to one or more individual characteristics of the marking object.

5. A method as claimed in claim 4 wherein the step of identifying in the database a second set of one or more marked articles (105) comprises the step of identifying the second set from the first set of one or more marked articles (105).

6. A method as claimed in any preceding claim further comprising the step of:
providing a specimen, marking object;
obtaining a 3D dataset corresponding to a 3D virtual model of a surface of the specimen, marking object;
extracting from the dataset by means of a surface segmentation analysis data indicative of a class of the specimen, marking object and storing said data in the database;
extracting from the dataset by means of a surface wavelet filtering operation data corresponding to one or more individual characteristics of the specimen, marking object and storing said data in the database.

7. A method as claimed in claim 6 further comprising the step of providing in the database data obtained from a plurality of marking objects, the data comprising data indicative of a class of each marking object extracted from a 3D dataset corresponding to a 3D virtual model of the surface of the marking object by means of the surface segmentation analysis and data corresponding to one or more individual characteristics of each marking object extracted from a 3D dataset corresponding to a 3D virtual model of the surface of the marking object by means of the surface wavelet filtering operation.

8. Apparatus for identifying characteristics of a marking object, the apparatus being **characterised by** being configured to:
obtain a 3D dataset corresponding to a 3D virtual model of a 3D surface topology of a marked article (105) by means of a sensor, wherein the marking object is a firearm; wherein the marking surface comprises one selected from amongst a firing pin, an ejector pin, a breech face, a magazine and the interior wall of the barrel of the firearm and the marked object comprises one selected from amongst a cartridge case or portion thereof, a replica of a cartridge case or portion thereof, a bullet, a portion of a bullet and a replica of a surface of a bullet or portion thereof;
extract from the dataset by means of a surface segmentation analysis data indicative of a class of the marking object and store said data in a database, wherein the surface segmentation analysis comprises dividing a region of the surface into regions consisting of hills and regions consisting of valleys;
extract from the dataset by means of a surface wavelet filtering operation data performed on a one dimensional signal characteristic of an the marking object of the marked article, said one dimensional signal characteristic obtained by projecting said surface along the direction of a rifling twist, a feature profile representing data corresponding to one or more individual characteristics of the marking object and store said data in the database.

9. Apparatus as claimed in claim 8 wherein the database comprises data obtained from a plurality of marked articles (105) each marked article (105) being an article marked by a marking object, the data comprising data indicative of a class of the marking object responsible for causing the markings on each marked article (105), the data further comprising data corresponding to one or more individual characteristics of the marking object responsible for marking each marked article (105).

10. Apparatus as claimed in claim 9 further configured to identify in the database a first set of one or more marked articles (105) having markings most likely caused by the marking object based on the extracted data indicative of the class of the marking object responsible for marking the marked article (105).

11. Apparatus method as claimed in claim 10 further configured to identify in the database a second set of one or more marked articles (105) having individual characteristics indicating that the marked article (105) was most likely marked by the marking object based on the extracted data corresponding to one or more individual characteristics of the marking object.

12. Apparatus as claimed in claim 11 configured to identify in the database a second set of one or more marked articles (105) by identifying the second set from the first set of one or more marked articles (105).

13. Apparatus as claimed in any one of claims 8 to 12 further arranged to:
obtain a 3D dataset corresponding to a 3D virtual model of a surface of a specimen, marking object;
extract from the dataset by means of a surface segmentation analysis data indicative of a class of the specimen, marking object and store said data in the database;
extract from the dataset by means of a surface wavelet filtering operation data corresponding to one or more individual characteristics of the specimen, marking object and store said data in the database.

14. Apparatus as claimed in claim 13 arranged to provide in the database data obtained from a plurality of marking objects, the data comprising data indicative of a class of each marking object extracted from a 3D dataset corresponding to a 3D virtual model of the surface of the marking object by means of the surface segmentation analysis and data corresponding to one or more individual characteristics of each marking object extracted from a 3D dataset corresponding to a 3D virtual model of the surface of the marking object by means of the surface wavelet filtering operation.

15. Apparatus as claimed in claim 13 or claim 14 arranged to identify in the database a third set of one or more marked articles (105) having individual characteristics that may have been created by the specimen, marking object.

## Patentansprüche

1. Eine Methode zur Identifizierung von Eigenschaften eines Markierungsobjekts, die folgende Schritte umfasst:
Bereitstellung eines markierten Artikels (105), der eine Oberfläche mit Markierungen aufweist, die durch eine Markierungsoberfläche des Markierungsobjekts hervorgerufen wurden, wobei es sich bei dem Markierungsobjekt um eine Feuerwaffe handelt; wobei die Markierungsoberfläche einen ausgewählten Schlagbolzen, einen Auswerferstift, einen Stoßboden und ein Magazin umfasst und die Innenwand des Laufs der Feuerwaffe und das markierte Objekt eine Patronenhülse oder einen Teil davon, eine Replik einer Patronenhülse oder einen Teil davon, eine Kugel, einen Teil einer Kugel und eine Replik einer Oberfläche einer Kugel oder eines Teils davon umfasst;
**dadurch gekennzeichnet, dass**:
es einen 3D-Datensatz gemäß einem virtuellen 3D-Modell oder einer 3D-Oberflächentopologie des markierten Artikels (105) mittels eines Sensors erhält;
es aus dem Datensatz mittels einer Oberflächensegmentierungsanalyse Daten extrahiert, die auf eine Klasse des Markierungsobjekts hindeuten und die besagten Daten in der Datenbank speichert, wobei die Oberflächensegmentierungsanalyse die Teilung eines Bereichs einer Oberfläche in Bereiche, die aus Bergen bestehen und in Bereiche, die aus Tälern bestehen, umfasst;
es aus dem Datensatz mittels eines Oberflächen-Wavelet-Filterungsvorgangs, der auf einer eindimensionalen Signaleigenschaft des Markierungsobjekts des markierten Artikels durchgeführt wird, wobei die besagte eindimensionale Signaleigenschaft durch die Projektion der besagten Oberfläche entlang einer Drallbewegung zustande kommt, ein Eigenschaftsprofil extrahiert, das Daten aufzeigt, die einer oder mehrerer individuellen Eigenschaft(en) des Markierungsobjekts entspricht und die besagten Daten in der Datenbank speichert.

2. Eine Methode gemäß den Angaben in Anspruch 1, weiter umfassend den Schritt zur Bereitstellung von Daten in der Datenbank, die von vielen verschiedenen markierten Artikeln (105) erhalten wurden, wobei es sich bei jedem markierten Artikel (105) um einen Artikel handelt, der von einem Markierungsobjekt markiert wird und wobei die Daten solche Daten umfassen, die auf eine Klasse des Markierungsobjekts hindeuten, die für die Markierungen auf jedem markierten Artikel (105) verantwortlich ist, wobei die Daten außerdem Daten umfassen, die einer oder mehrerer individuellen Eigenschaft(en) des Markierungsobjekts entsprechen, das für die Markierung eines jeden markierten Artikels (105) zuständig ist.

3. Eine Methode gemäß den Angaben in Anspruch 2, weiter umfassend den Schritt zur Identifizierung eines ersten Satzes eines oder mehrerer markierten Artikel(s) (105) in der Datenbank mit Markierungen, die höchstwahrscheinlich von dem Markierungsobjekt auf der Grundlage der extrahierten Daten verursacht wurden, die auf die Klasse des Markierungsobjekts hindeuten, die für die Markierungen auf jedem markierten Artikel (105) verantwortlich ist.

4. Eine Methode gemäß den Angaben in Anspruch 3, weiter umfassend den Schritt zur Identifizierung eines zweiten Satzes eines oder mehrerer markierten Artikel(s) (105) in der Datenbank mit individuellen Eigenschaften, die darauf hinweisen, dass der markierte Artikel (105) höchstwahrscheinlich von dem Markierungsobjekt auf der Grundlage der extrahierten Daten markiert wurde, der einer oder mehrerer individueller Eigenschaft(en) des Markierungsobjekts entspricht.

5. Eine Methode gemäß den Angaben in Anspruch 4, bei der der Schritt zur Identifizierung eines zweiten Satzes eines oder mehrerer markierten Artikel(s) (105) in der Datenbank den Schritt zur Identifizierung eines ersten Satzes eines oder mehrerer markierten Artikel(s) (105) umfasst.

6. Eine Methode gemäß den Angaben in allen vorhergehenden Ansprüchen, weiter umfassend den Schritt:
zur Bereitstellung eines Musters, eines Markierungsobjekts;
zum Erhalt eines 3D-Datensatzes gemäß einem virtuellen 3D-Modell einer Oberfläche des Musters, Markierungsobjekts;
zur Extraktion von Daten aus einem Datensatz mittels einer Oberflächensegmentierungsanalyse, die auf eine Klasse des Musters, Markierungsobjekts hindeuten und zur Speicherung der besagten Daten in der Datenbank;
zur Extraktion von Daten aus dem Datensatz mittels eines Oberflächen-Wavelet-Filterungsvorgangs, die einer oder mehrerer individuellen Eigenschaft(en) des Musters, Markierungsobjekts entsprechen und die besagten Daten in der Datenbank speichern.

7. Eine Methode gemäß den Angaben in Anspruch 6, weiter umfassend den Schritt zur Bereitstellung von Daten in der Datenbank, die aus verschiedenen Markierungsobjekten erhalten wurden, wobei diese Daten solche Daten umfassen, die auf eine Klasse eines jeden Markierungsobjekts hindeuten, das aus einem 3D-Datensatz gemäß einem virtuellen 3D-Modell an der Oberfläche des Markierungsobjekts mittels der Oberflächensegmentierungsanalyse extrahiert wurde und Daten gemäß einer oder mehrerer individuellen Eigenschaft(en) eines jeden Markierungsobjekts, das aus einem 3D-Datensatz gemäß einem virtuellen 3D-Modell der Oberfläche des Markierungsobjekts mittels eines Oberflächen-Wavelet-Filterungsvorgangs extrahiert wurde.

8. Gerät zur Identifizierung von Eigenschaften eines Markierungsobjekts, **gekennzeichnet durch** die Konfigurierung:
zum Erhalt eines 3D-Datensatzes gemäß einem virtuellen 3D-Modell einer 3D-Oberflächentopologie eines markierten Artikels (105) mittels eines Sensors, wobei es sich bei dem Markierungsobjekt um eine Feuerwaffe handelt; wobei die Markierungsoberfläche einen ausgewählten Schlagbolzen, einen Auswerferstift, einen Stoßboden und ein Magazin umfasst und die Innenwand des Laufs der Feuerwaffe und das markierte Objekt eine Patronenhülse oder einen Teil davon, eine Replik einer Patronenhülse oder einen Teil davon, eine Kugel, einen Teil einer Kugel und eine Replik einer Oberfläche einer Kugel oder eines Teils davon umfasst;
zur Extraktion von Daten aus dem Datensatz mittels einer Oberflächensegmentierungsanalyse, die auf eine Klasse des Markierungsobjekts hindeuten und zur Speicherung der besagten Daten in der Datenbank, wobei die Oberflächensegmentierungsanalyse die Teilung eines Bereichs einer Oberfläche in Bereiche, die aus Bergen bestehen und in Bereiche, die aus Tälern bestehen, umfasst
zur Extraktion eines Eigenschaftsprofils aus dem Datensatz mittels eines Oberflächen-Wavelet-Filterungsvorgangs, der auf einer eindimensionalen Signaleigenschaft des Markierungsobjekts des markierten Artikels durchgeführt wird, wobei die besagte eindimensionale Signaleigenschaft **durch** die Projektion der besagten Oberfläche entlang einer Drallbewegung zustande kommt, welches Eigenschaftsprofil Daten aufzeigt, die einer oder mehrerer individuellen Eigenschaft(en) des Markierungsobjekts entsprechen und die besagten Daten in der Datenbank speichert.

9. Gerät gemäß den Angaben in Anspruch 8, wobei die Datenbank Daten umfasst, die von vielen verschiedenen markierten Artikeln (105) erhalten wurden, wobei es sich bei jedem markierten Artikel (105) um einen Artikel handelt, der von einem Markierungsobjekt markiert wird und wobei die Daten solche Daten umfassen, die auf eine Klasse des Markierungsobjekts hindeuten, die für die Markierungen auf jedem markierten Artikel (105) verantwortlich ist, wobei die Daten außerdem Daten umfassen, die einer oder mehrerer individuellen Eigenschaft(en) des Markierungsobjekts entsprechen, das für die Markierung eines jeden markierten Artikels (105) zuständig ist.

10. Gerät gemäß den Angaben in Anspruch 9 mit weiterer Konfiguration zur Identifizierung eines ersten Satzes eines oder mehrerer markierten Artikel(s) (105) in der Datenbank mit Markierungen, die höchstwahrscheinlich von dem Markierungsobjekt auf der Grundlage der extrahierten Daten verursacht wurden, die auf die Klasse des Markierungsobjekts hindeuten, die für die Markierungen auf jedem markierten Artikel (105) verantwortlich ist.

11. Gerät gemäß den Angaben in Anspruch 10 mit weiterer Konfiguration zur Identifizierung eines zweiten Satzes eines oder mehrerer markierten Artikel(s) (105) in der Datenbank mit individuellen Eigenschaften, die darauf hinweisen, dass der markierte Artikel (105) höchstwahrscheinlich von dem Markierungsobjekt auf der Grundlage der extrahierten Daten markiert wurde, der einer oder mehrerer individueller Eigenschaft(en) des Markierungsobjekts entspricht.

12. Gerät gemäß den Angaben in Anspruch 11 mit weiterer Konfiguration zur Identifizierung eines zweiten Satzes eines oder mehrerer markierten Artikel(s) (105) in der Datenbank, wobei der zweite Satz von dem ersten Satz eines oder mehrerer markierten Artikel(s) (105) identifiziert wird.

13. Gerät gemäß den Angaben in einem der Ansprüche 8 bis 12 mit weiterer Anordnung:
zum Erhalt eines 3D-Datensatzes gemäß einem virtuellen 3D-Modell einer Oberfläche des Musters, Markierungsobjekts;
zur Extraktion von Daten aus einem Datensatz mittels einer Oberflächensegmentierungsanalyse, die auf eine Klasse des Musters, Markierungsobjekts hindeuten und zur Speicherung der besagten Daten in der Datenbank;
zur Extraktion von Daten aus dem Datensatz mittels eines Oberflächen-Wavelet-Filterungsvorgangs, die einer oder mehrerer individuellen Eigenschaft(en) des Musters, Markierungsobjekts entsprechen und zur Speicherung der besagten Daten in der Datenbank.

14. Gerät gemäß den Angaben in Anspruch 13 zur Bereitstellung von Daten in der Datenbank, die aus verschiedenen Markierungsobjekten erhalten wurden, wobei diese Daten solche Daten umfassen, die auf eine Klasse eines jeden Markierungsobjekts hindeuten, das aus einem 3D-Datensatz gemäß einem virtuellen 3D-Modell an der Oberfläche des Markierungsobjekts mittels der Oberflächensegmentierungsanalyse extrahiert wurde und Daten gemäß einer oder mehrerer individuellen Eigenschaft(en) eines jeden Markierungsobjekts, das aus einem 3D-Datensatz gemäß einem virtuellen 3D-Modell der Oberfläche des Markierungsobjekts mittels eines Oberflächen-Wavelet-Filterungsvorgangs extrahiert wurde.

15. Gerät gemäß den Angaben in Anspruch 13 oder Anspruch 14 zur Identifizierung eines dritten Satzes eines oder mehrerer markierten Artikel(s) (105) mit individuellen Eigenschaften, die möglicherweise durch das Muster, Markierungsobjekt hervorgerufen wurden.

## Revendications

1. Procédé d'identification de caractéristiques d'un objet de marquage comprenant les étapes consistant à :
produire un article marqué (105) qui présente une surface comportant des marques occasionnées par une surface de marquage de l'objet de marquage, ledit objet de marquage étant une arme à feu ; ladite surface de marquage consistant en un élément choisi parmi un percuteur, un éjecteur, une tranche de culasse, un chargeur et la paroi interne du canon de l'arme à feu et ledit objet marqué consistant en un élément choisi parmi une douille de cartouche ou une partie de celle-ci, une réplique de douille de cartouche ou une partie de celle-ci, une balle, une partie de balle et une réplique de surface de balle ou une partie de celle-ci ;
**caractérisé par** les étapes consistant à :
obtenir une série de données 3D correspondant à un modèle virtuel en 3D d'une topologie de surface en 3D de l'article marqué (105) au moyen d'un capteur ;
extraire à partir de la série de données au moyen d'une analyse par segmentation de surface des données indicatrices d'une catégorie de l'objet de marquage et stocker lesdites données dans la base de données, ladite analyse par segmentation de surface consistant au fractionnement d'une région de la surface en régions se composant de reliefs et en régions se composant de creux ;
extraire à partir de la série de données au moyen d'une opération de filtrage d'ondelettes de surface réalisée sur une seule caractéristique de signal dimensionnelle de l'objet de marquage de l'article marqué, ladite caractéristique de signal dimensionnelle obtenue par projection de ladite surface suivant la direction d'un pas de rayures, un profil caractéristique qui représente des données correspondant à une ou plusieurs caractéristiques individuelles de l'objet de marquage et stocker lesdites données dans la base de données.

2. Procédé selon la revendication 1 comprenant en outre l'étape consistant à produire dans la base de données des données obtenues à partir d'une pluralité d'articles marqués (105), chaque article marqué (105) étant un article marqué par un objet de marquage, les données contenant des données indicatrices de la catégorie de l'objet de marquage responsable de la génération des marques occasionnées sur chaque article marqué (105), les données contenant en outre des données correspondant à une ou plusieurs caractéristiques individuelles de l'objet de marquage responsable du marquage de chaque article marqué (105).

3. Procédé selon la revendication 2 comprenant l'étape consistant à identifier dans la base de données un premier ensemble d'un ou plusieurs articles marqués (105) qui présentent des marques occasionnées le plus vraisemblablement par l'objet de marquage sur la base des données extraites indicatrices de la catégorie de l'objet de marquage responsable du marquage de l'article marqué (105).

4. Procédé selon la revendication 3 comprenant en outre l'étape consistant à identifier dans la base de données un deuxième ensemble d'un ou plusieurs article marqués (105) possédant des caractéristiques individuelles qui indiquent que l'article marqué (105) a été le plus vraisemblablement marqué par l'objet de marquage sur la base des données extraites correspondant à une ou plusieurs caractéristiques individuelles de l'objet de marquage.

5. Procédé selon la revendication 4, ladite étape consistant à identifier dans la base de données un deuxième ensemble d'un ou plusieurs articles marqués (105) comprenant l'étape consistant à identifier le deuxième ensemble à partir du premier ensemble d'un ou plusieurs articles marqués (105).

6. Procédé selon l'une quelconque des revendications précédentes comprenant en outre les étapes consistant à :
produire un objet de marquage échantillon ;
obtenir une série de données 3D correspondant à un modèle virtuel en 3D d'une surface de l'objet de marquage échantillon ;
extraire à partir de la série de données au moyen d'une analyse par segmentation de surface des données indicatrices d'une catégorie de l'objet de marquage échantillon et stocker lesdites données dans la base de données ;
extraire à partir de la série de données au moyen d'une opération de filtrage d'ondelettes de surface des données correspondant à une ou plusieurs caractéristiques individuelles de l'objet de marquage échantillon et stocker lesdites données dans la base de données.

7. Procédé selon la revendication 6 comprenant en outre l'étape consistant à produire dans la base de données obtenue à partir d'une pluralité d'objets de marquage les données contenant des données indicatrices d'une catégorie de chaque objet de marquage extraites d'une série de données 3D correspondant à un modèle virtuel en 3D de la surface de l'objet de marquage au moyen de l'analyse par segmentation de surface et des données correspondant à une ou plusieurs caractéristiques individuelles de chaque objet de marquage extraites d'une série de données 3D correspondant à un modèle virtuel en 3D de la surface de l'objet de marquage au moyen de l'opération de filtrage d'ondelettes de surface.

8. Appareil permettant d'identifier des caractéristiques d'un objet de marquage, l'appareil étant **caractérisé par le fait qu'**il est configuré pour :
obtenir une série de données 3D correspondant à un modèle virtuel en 3D d'une topologie de surface en 3D d'un article marqué (105) au moyen d'un capteur, ledit objet de marquage étant une arme à feu ; ladite surface de marquage consistant en un élément choisi parmi un percuteur, un éjecteur, une tranche de culasse, un chargeur et la paroi interne du canon de l'arme à feu et ledit objet marqué consistant en un élément choisi parmi une douille de cartouche ou une partie de celle-ci, une réplique de douille de cartouche ou une partie de celle-ci, une balle, une partie de balle et une réplique de surface de balle ou une partie de celle-ci ;
extraire à partir de la série de données au moyen d'une analyse par segmentation de surface des données indicatrices d'une catégorie de l'objet de marquage et stocker lesdites données dans une base de données, ladite analyse par segmentation de surface consistant au fractionnement d'une région de la surface en régions se composant de reliefs et en régions se composant de creux ;
extraire à partir de la série de données au moyen d'une opération de filtrage d'ondelettes de surface réalisée sur une seule caractéristique de signal dimensionnelle d'un objet de marquage de l'article marqué, ladite caractéristique de signal dimensionnelle obtenue par projection de ladite surface suivant la direction d'un pas de rayures, un profil caractéristique qui représente des données correspondant à une ou plusieurs caractéristiques individuelles de l'objet de marquage et stocker lesdites données dans la base de données.

9. Appareil selon la revendication 8, ladite base de données contenant des données obtenues à partir d'une pluralité d'articles marqués (105), chaque article marqué (105) étant un article marqué par un objet de marquage, les données contenant des données indicatrices d'une catégorie de l'objet de marquage responsable de la génération des marques occasionnées sur chaque article marqué (105), les données contenant en outre des données correspondant à une ou plusieurs caractéristiques individuelles de l'objet de marquage responsable du marquage de chaque article marqué (105).

10. Appareil selon la revendication 9 configuré en outre pour identifier dans la base de données un premier ensemble d'un ou plusieurs article marqués (105) possédant des marques le plus vraisemblablement occasionnées par l'objet de marquage sur la base des données extraites indicatrices de la catégorie de l'objet de marquage responsable du marquage de l'article marqué (105).

11. Appareil selon la revendication 10 configuré en outre pour identifier dans la base de données un deuxième ensemble d'un ou plusieurs articles marqués (105) possédant des caractéristiques individuelles qui indiquent que l'article marqué (105) a été le plus vraisemblablement marqué par l'objet de marquage sur la base des données extraites correspondant à une ou plusieurs caractéristiques individuelles de l'objet de marquage.

12. Appareil selon la revendication 11 configuré pour identifier dans la base de données un deuxième ensemble d'un ou plusieurs articles marqués (105) en identifiant le deuxième ensemble à partir du premier ensemble d'un ou plusieurs articles marqués (105).

13. Appareil selon l'une quelconque des revendications 8 à 12 agencé en outre pour :
obtenir une série de données 3D correspondant à un modèle virtuel en 3D d'une surface d'un objet de marquage échantillon ;
extraire de la série de données au moyen d'une analyse par segmentation de surface des données indicatrices d'une catégorie de l'objet de marquage échantillon et stocker lesdites données dans la base de données ;
extraire de la série de données au moyen d'une opération de filtrage d'ondelettes de surface des données correspondant à une ou plusieurs caractéristiques individuelles de l'objet de marquage échantillon et stocker lesdites données dans la base de données.

14. Appareil selon la revendication 13 agencé pour produire dans la base de données des données obtenues à partir d'une pluralité d'objets de marquage, les données contenant des données indicatrices d'une catégorie de chaque objet de marquage extraites d'une série de données 3D correspondant à un modèle virtuel en 3D de la surface de l'objet de marquage au moyen de l'analyse par segmentation de surface et des données correspondant à une ou plusieurs caractéristiques individuelles de chaque objet de marquage extraites d'une série de données 3D correspondant à un modèle virtuel en 3D de la surface de l'objet de marquage au moyen de l'opération de filtrage d'ondelettes de surface.

15. Appareil selon la revendication 13 ou la revendication 14 agencé pour identifier dans la base de données un troisième ensemble d'un ou plusieurs articles marqués (105) possédant des caractéristiques individuelles qui peuvent avoir été générées par l'objet de marquage échantillon.
